# EUROPÄISCHE PATENTANMELDUNG

(11) **EP 4 016 359 A1**
(43) Veröffentlichungstag der Anmeldung: **22.06.2022**
(21) Anmeldenummer: 20216040.4
(22) Anmeldetag: 21.12.2020
(51) Int. Cl.: G06F 30/10, G06F 9/46, G06Q 10/06, H04L 29/06

(54) **VERFAHREN, COMPUTER-PROGRAMM-PRODUKT UND MODELLIERUNGSWERKZEUG ZUM REFERENZMODELLBASIERTEN, ANFORDERUNGSBEZOGENEN ENTWICKELN EINES TECHNISCHEN SYSTEMS**

(71) Anmelder: Siemens Aktiengesellschaft, 80333 München (DE)
(72) Erfinder: Kranz, Sieglinde, 82110 Germering (DE); Regnat, Nikolaus, 81827 München (DE)

(57) **Zusammenfassung**

Um eine Anforderung für eine Systemkomponente eines zu entwickelnden technischen Systems (SYₜ) referenzmodellbasiert, automatisiert zu ermitteln, wird es vorgeschlagen, durch
- Zugriffe auf einen gespeicherten Digitalen Zwilling (DZ) als komplexes Referenzmodell (RM) und digitale Repräsentation eines technisches Referenz-Systems (RSYₜ) mit mehreren, jeweils einen Beitrag zur Funktion des technischen Referenz-Systems (RSYₜ) leistenden Referenz-Systemkomponenten (RSYK) Referenzmodellanforderungen (RMA) zur Systementwicklung weiterzugeben,
- eine computergestützte Zugriffsorchestrierung (ZGO), bei der mit einer benutzerbasierten Daten- und Befehlseingabe sowie einer logikbasierten Datenbearbeitung und Befehlsumsetzung nach regelsatzbasierter Maßgabe der Zugriff orchestriert wird, und für eine zur Systementwicklung vorgesehene, dedizierte, einen Beitrag zur Funktion des technischen Systems leistende Systemkomponente (SYK_{d}) mit einer dedizierten Anforderung (AF_{d}) in Bezug auf das Referenz-System eine zu diesem Zweck geeignete Referenzmodellanforderung (RMAₓ) ermittelt wird, (i) in einer ersten Orchestrierungsphase (OP-1) einen Ablageort in dem Digitalen Zwilling für die zur geeignete Referenzmodellanforderung (RMAₓ) zu ermitteln, (ii) in einer zweiten Orchestrierungsphase (OP-2) eine zum Ablageort gehörende und für die Weitergabe bedeutende Relevanz der Referenzmodellanforderung (RMAₓ) für die Entwicklung des technischen Systems (SYₜ) aus verschiedenen Perspektiven zu ermitteln und (iii) in einer dritten Orchestrierungsphase (OP-3) aus der ermittelten Relevanz die Referenzmodellanforderung (RMAₓ) zu extrahieren.

## Beschreibung

Verfahren, Computer-Programm-Produkt und Modellierungswerkzeug zum referenzmodellbasierten, anforderungsbezogenen Entwickeln eines technischen Systems

Die Erfindung bezieht sich auf ein Verfahren zum referenzmodellbasierten, anforderungsbezogenen Entwickeln eines technischen Systems gemäß dem Oberbegriff des Patentanspruches 1, ein Computer-Programm-Produkt zum referenzmodellbasierten, anforderungsbezogenen Entwickeln eines technischen Systems gemäß dem Oberbegriff des Patentanspruches 4 und ein Modellierungswerkzeug zum referenzmodellbasierten, anforderungsbezogenen Entwickeln eines technischen Systems gemäß dem Oberbegriff des Patentanspruches 7.

Bei der Entwicklung komplexer Systeme von komplexen Systemen unterschiedlicher technischer Domäne, im Folgenden als technisches System bezeichnet, ist es üblich, dass z.B. TeilSysteme dieser technischen Systeme von anderen Organisationseinheiten oder externen Zulieferern entwickelt werden. Dazu ist es notwendig entsprechende Vorgaben oder Anforderungen an diese Teilsysteme zu definieren. Werden für die Entwicklung modellbasierte Verfahren eingesetzt, ist es zweckmäßig auf bereits vorhandene, also schon entwickelte, Systeme gleicher oder vergleichbarer technischer Domäne und unterschiedlicher oder vergleichbarer Komplexität inklusive deren Systemkomponenten, die zu mehreren in den bereits vorhandenen Systemen enthalten sind und die Beiträge zu Funktionen der bereits vorhandenen Systeme leisten, zurückzugreifen und deren komplexen Referenzmodelle, die solche Vorgaben oder Anforderungen enthalten, für die Entwicklung des technischen Systeme derart zu nutzen, dass die Vorgaben oder Anforderungen weitergegeben werden können.

Solche Systeme werden im Folgenden als technische Referenz-Systeme und deren Systemkomponenten als Referenz-Systemkomponenten bezeichnet.

Die genannten technischen Domänen können beliebig sein. So sind es beispielsweise, nicht abschließend aufgezählt: Automatisierungstechnik, Energietechnik, Kommunikationstechnik, Medizintechnik, Fahrzeugtechnik betreffend Fahrzeuge zu Straße, Schiene, Wasser oder Luft.

Die in den komplexen Referenzmodellen enthaltenen Vorgaben oder Anforderungen beinhalten entweder Aussagen über notwendige Beschaffenheiten und Fähigkeiten der Referenz-Systemkomponenten, die diese zu erfüllen haben damit textuelle Dokumentvorgaben, Normen und/oder Spezifikationen entsprochen wird sowie Leistungen erbracht werden, oder Aussagen über notwendige Beschaffenheiten und Fähigkeiten des Referenz-Systems, die dieses zu haben hat damit textuelle Dokumentvorgaben, Normen und/oder Spezifikationen entsprochen wird sowie Leistungen erbracht werden.

Die komplexen Referenzmodelle repräsentieren das jeweilige technische Referenz-System digital und werden demzufolge als Digitale Zwillinge bezeichnet. Jeder Digitale Zwilling eines technischen Referenz-Systems, in dem das komplexe Referenzmodell dieses Systems gespeichert ist, repräsentiert das entsprechende Referenz-System digital.

Die Weitergabe der in den komplexen Referenzmodellen enthaltenen Vorgaben oder Anforderungen ist jedoch nur sehr schwierig bzw. mit hohem Aufwand durchführbar, da es keine automatisierten Verfahren gibt gezielte die Vorgaben oder Anforderungen auszuwählen und weiterzugeben, die für ein bestimmtes Teilsystem der technischen Systeme notwendig sind. Darüber hinaus muss der Empfänger der Vorgaben oder Anforderungen in der Lage sein, gleichzeitig Vorgaben oder Anforderungen von unterschiedlichen Sendern zu erhalten, um ein geeignetes Teilsystem entwerfen zu können. Dabei ist es für den Empfänger entscheidend Synergien zwischen den verschiedenen Vorgaben oder Anforderungen identifizieren zu können.

Bisherige Ansätze lösen dieses Problem nicht oder nur teilweise. Üblicherweise werden entweder textuelle Vorgaben oder Anforderungen erstellt oder manuell spezifische Vorgaben/Anforderungen-Modelle erstellt, welche dann weitergegeben werden. Dies führt zu einem hohen Aufwand beim Ersteller (Sender) der Vorgaben oder Anforderungen und zudem oftmals zu Verständnisproblemen beim Empfänger der Vorgaben oder Anforderungen. Der Abgleich der unterschiedlichen textuellen Vorgaben oder Anforderungen beim Empfänger ist zudem mit hohem Aufwand verbunden.

Die der Erfindung zugrundeliegende Aufgabe besteht darin, ein Verfahren, ein Computer-Programm-Produkt und ein Modellierungswerkzeug zum referenzmodellbasierten, anforderungsbezogenen Entwickeln eines technischen Systems anzugeben, bei dem eine Anforderung für eine Systemkomponente des zu entwickelnden technischen Systems auf der Basis eines Referenzmodells automatisiert ermittelt wird.

Die vorstehend bezeichnete Aufgabe wird ausgehend von dem im Oberbegriff des Patentanspruches 1 definierten Verfahren durch die im Kennzeichen des Patentanspruches 1 angegebenen Merkmale gelöst.

Darüber hinaus wird diese Aufgabe ausgehend von dem im Oberbegriff des Patentanspruches 4 definierten Computer-Programm-Produkt durch die im Kennzeichen des Patentanspruches 4 angegebenen Merkmale gelöst.

Weiterhin wird diese Aufgabe ausgehend von dem im Oberbegriff des Patentanspruches 7 definierten Fahrzeug-Steuerungseinheit durch die im Kennzeichen des Patentanspruches 7 angegebenen Merkmale gelöst.

Die der Erfindung zugrundeliegende Idee gemäß der in den Ansprüchen 1, 4 und 7 [Anspruch 1 betreffend ein Verfahren; Anspruch 4 betreffend ein Computer-Programm-Produkt; Anspruch 7 betreffend ein Modellierungswerkzeug] jeweils angegebenen technischen Lehre besteht darin, dass durch
a) Zugriffe auf einen gespeicherten Digitalen Zwilling als komplexes Referenzmodell und digitale Repräsentation eines technisches Referenz-Systems mit mehreren, jeweils einen Beitrag zur Funktion des technischen Referenz-Systems leistenden Referenz-Systemkomponenten Referenzmodellanforderungen für die Entwicklung des technischen Systems weitergebbar sind, die folgendes beinhalten
   - Aussagen über notwendige Beschaffenheiten und Fähigkeiten der Referenz-Systemkomponenten, die diese zu erfüllen haben damit textuelle Dokumentvorgaben, Normen und/oder Spezifikationen entsprochen wird sowie Leistungen erbracht werden, oder
   - Aussagen über notwendige Beschaffenheiten und Fähigkeiten des Referenz-Systems, die dieses zu haben hat damit textuelle Dokumentvorgaben, Normen und/oder Spezifikationen entsprochen wird sowie Leistungen erbracht werden, beinhalten,
b) eine computergestützte Zugriffsorchestrierung, bei der mit einer benutzerbasierten Daten- und Befehlseingabe sowie einer logikbasierten Datenbearbeitung und Befehlsumsetzung nach regelsatzbasierter Maßgabe der Zugriff orchestriert wird, und für eine zur Entwicklung des technischen Systems, insbesondere durch Benutzerauswahl, vorgesehene, dedizierte Systemkomponente, die einen Beitrag zur Funktion des technischen Systems leistet, mit einer, insbesondere durch Benutzerauswahl, vorgesehenen, dedizierten Anforderung in Bezug auf das Referenz-System mit den Referenz-Systemkomponenten eine zu diesem Zweck geeignete Referenzmodellanforderung der weitergebbaren Referenzmodellanforderungen ermittelt wird,
b1) in einer ersten Orchestrierungsphase ein Ablageort in dem Digitalen Zwilling für die zur Entwicklung des technischen Systems geeignete Referenzmodellanforderung ermittelt wird,
b2) in einer zweiten Orchestrierungsphase eine zum Ablageort gehörende und für die Weitergabe bedeutende Relevanz der Referenzmodellanforderung für die Entwicklung des technischen Systems aus verschiedenen Perspektiven ermittelt wird,
b3) in einer dritten Orchestrierungsphase aus der ermittelten Relevanz die Referenzmodellanforderung extrahiert wird.

Im Gegensatz zu den bekannten Lösungen ist es mit der vorstehend vorgeschlagenen Vorgehensweise wesentlich einfacher, für eine zur Entwicklung des technischen Systems vorgesehene, dedizierte Systemkomponente mit einer vorgesehenen, dedizierten Anforderung eine zu diesem Zweck geeignete Vorgabe oder Anforderung eines Referenzmodells zu ermitteln und weiterzugeben.

Für den Sender der Vorgaben ist das Verfahren von großem Vorteil, da bestehende Entwicklungsmodelle, wie das komplexe Referenzmodell, genutzt werden und aus diesem automatisiert für die dedizierte Systemkomponente mit der dedizierten Anforderung zur Entwicklung des technischen Systems ein Vorgabemodelle erzeugt werden kann. Der Empfänger solcher Vorgabemodelle bekommt mit diesem Verfahren wesentlich formalere Vorgaben, welche sich auch einfach abgleichen lassen. Zudem kann der Empfänger auch auf mehrere Vorgabenmodelle referenzieren, um eine für ihn optimale Lösung durch Identifikation von Synergien zu erstellen.

Vorteilhafte Weiterbildungen Erfindung betreffend das Verfahren nach Anspruch 1 sind in den anhängigen Ansprüchen 2 und 3 angegeben, während vorteilhafte Weiterbildungen Erfindung, die das Computer-Programm-Produkt nach Anspruch 4 betreffen, in den anhängigen Ansprüchen 5 und 6 angegeben sind.

Vorteilhafte Weiterbildungen Erfindung betreffend das Verfahren nach Anspruch 1 sind in den anhängigen Ansprüchen 2 und 3 angegeben, während vorteilhafte Weiterbildungen Erfindung, die das Computer-Programm-Produkt nach Anspruch 4 betreffen, in den anhängigen Ansprüchen 5 und 6 angegeben sind.

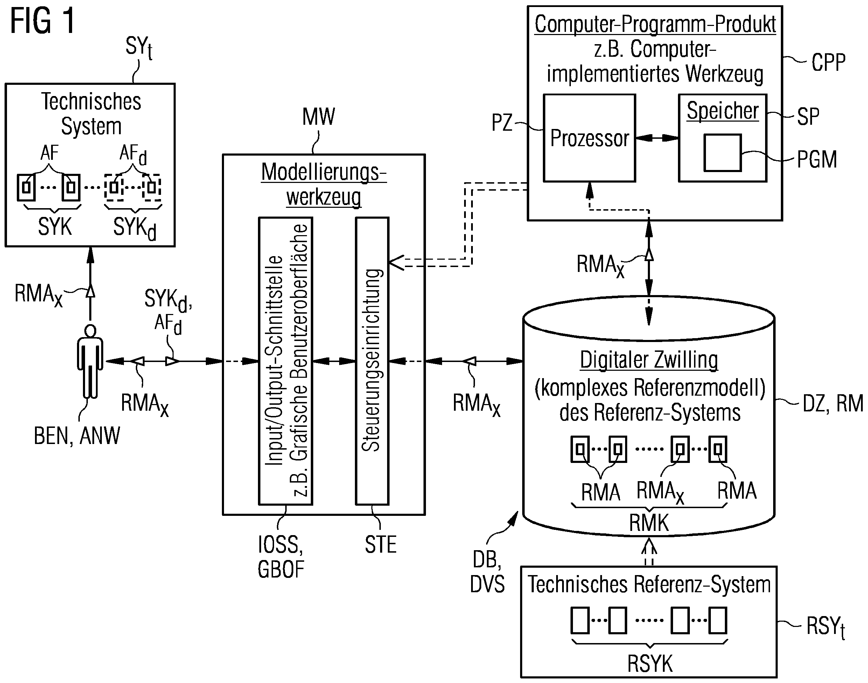

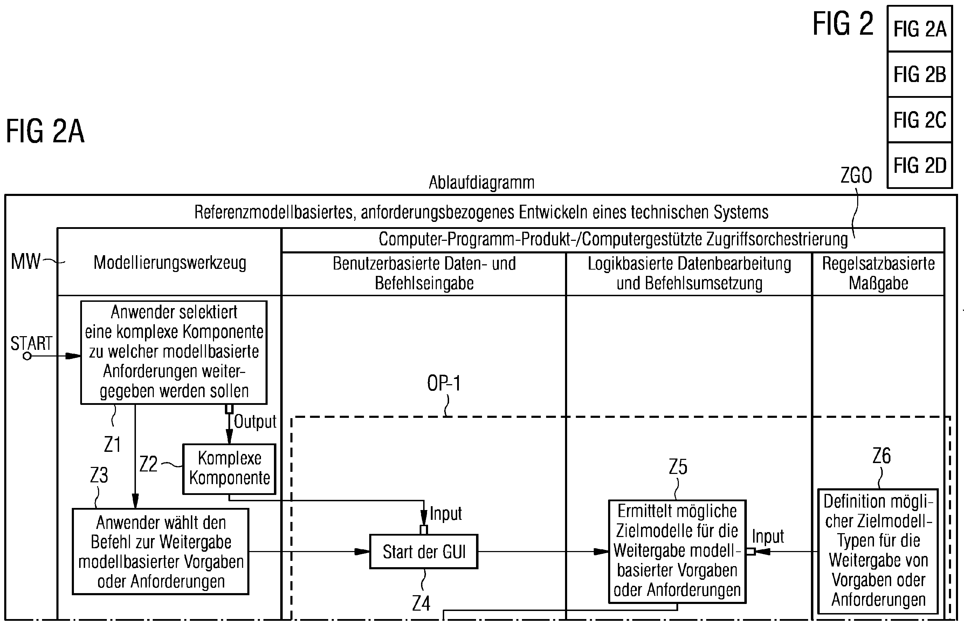

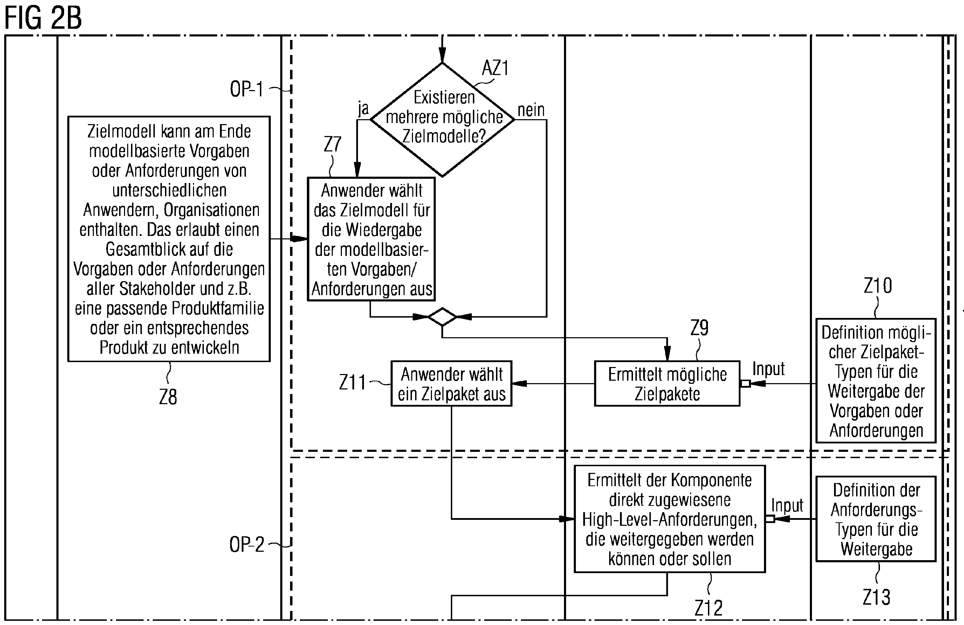

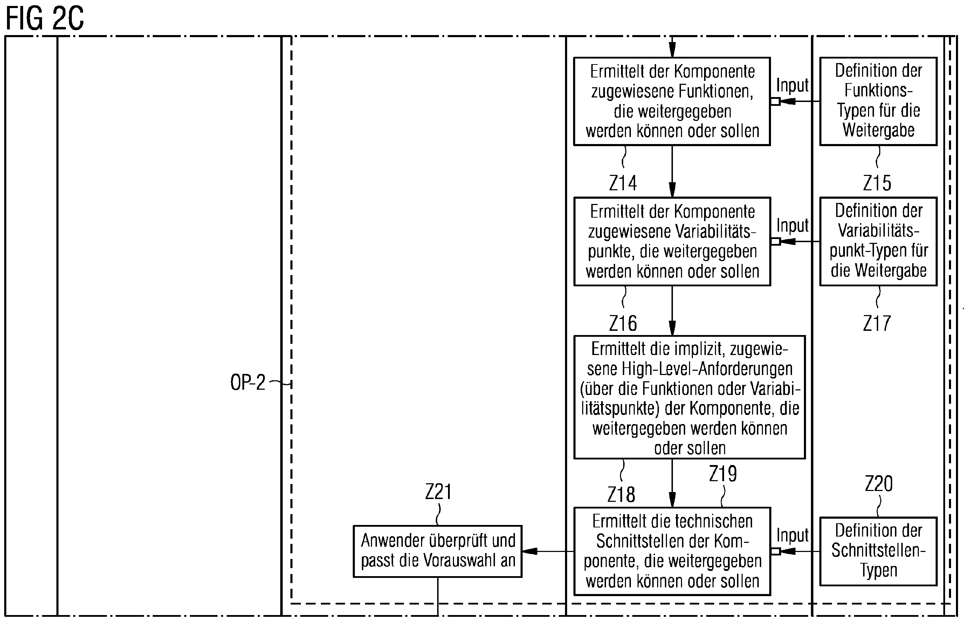

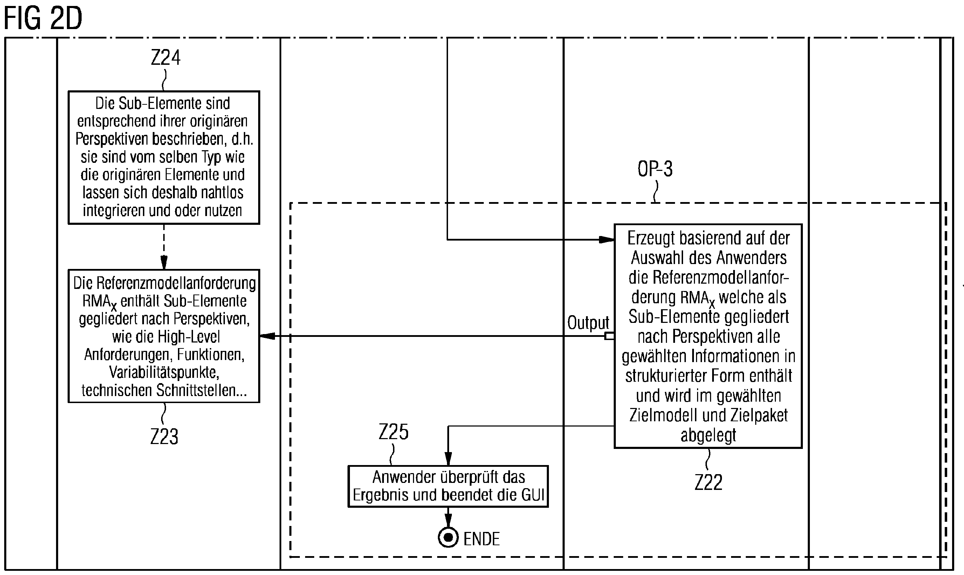

Weitere Vorteile der Erfindung ergeben sich aus den Unteransprüchen sowie der nachfolgenden Beschreibung eines Ausführungsbeispiels der Erfindung anhand der FIGUREN 1 und 2 erläutert. Diese zeigen:
- FIGUR 1: Szenario zum referenzmodellbasierten, anforderungsbezogenen Entwickeln eines technischen Systems,
- FIGUR 2: Ablaufdiagramm für das referenzmodellbasierte, anforderungsbezogene Entwickeln des technischen Systems gemäß dem in der FIGUR 1 dargestellten Szenario.

FIGUR 1 zeigt ein Szenario zum referenzmodellbasierten, anforderungsbezogenen Entwickeln eines technischen Systems SYₜ. Im final entwickelten Zustand enthält ein solches technisches System SYₜ enthält eine Vielzahl von Systemkomponenten SYK, die Teilsysteme des technische System SYₜ darstellen und die jeweils einen Beitrag zur Funktion des technischen Systems SYₜ leisten. Den Systemkomponenten SYK sind Anforderungen AF zugeordnet oder zugewiesen, die jeweils entweder Aussagen über notwendige Beschaffenheiten und Fähigkeiten der Systemkomponenten SYK, die diese zu erfüllen haben damit textuelle Dokumentvorgaben, Normen und/oder Spezifikationen entsprochen wird sowie Leistungen erbracht werden, oder Aussagen über notwendige Beschaffenheiten und Fähigkeiten des technischen Systems SYₜ, die dieses zu haben hat damit textuelle Dokumentvorgaben, Normen und/oder Spezifikationen entsprochen wird sowie Leistungen erbracht werden, beinhalten.

Das in der FIGUR 1 dargestellte technischen System SYₜ ist jedoch noch nicht fertig entwickelt, was durch gestrichelt dargestellte Systemkomponenten bzw. Teilsysteme gezeigt wird. So gibt es eine zur Entwicklung des technischen Systems SYₜ vorgesehene, dedizierte Systemkomponente SYK_{d}, die wie die anderen Systemkomponenten auch einen Beitrag zur Funktion des technischen Systems SYₜ leistet und der eine dedizierte Anforderung AF_{d} mit den genannten Eigenschaften zugeordnet oder zugewiesen ist. Die diesbezüglich vorgesehene Entwicklung des technischen Systems SYₜ soll erfindungsgemäß referenzmodellbasiert erfolgen, was nachfolgend und im Weiteren im Kontext der Beschreibung von FIGUR 2 erläutert werden wird.

Das technische System SYₜ ist Gegenstand einer "physikalischen Welt" kann gemäß der eingangs angegebenen Definition für technische Domänen z.B. im Bereich der Medizintechnik ein Computertomograph oder ein Magnetresonanztomograph oder im Bereich der Energietechnik eine Windkraftanlage oder im Bereich der Fahrzeugtechnik ein Personenkraftwagen (Auto) sein. Die dedizierte Systemkomponente bzw. das dedizierte Teilsystem SYK_{d}, die bzw. das für die Entwicklung des technischen Systems SYₜ vorgesehen ist, könnte demzufolge z.B. im Bereich der Medizintechnik ein Detektor oder im Bereich der Energietechnik ein Generator oder im Bereich der Fahrzeugtechnik ein Motor sein.

Weitere Gegenstände der "physikalischen Welt" gemäß dem dargestellten Szenario zur referenzmodellbasierten, komponentenbezogenen Entwickelung des technischen Systems SYₜ sind ein technisches Referenz-System RSYₜ mit mehreren Referenz-Systemkomponenten RSYK, die auch wieder jeweils einen Beitrag zur Funktion des technischen Referenz-Systems RSYₜ leisten, und ein Modellierungswerkzeug MW zur modellbasierten Entwicklung komplexer technischer Systeme, das vorzugsweise als Arbeitsplatzrechner (Workstation) oder Personal Computer ausgebildet ist.

Beide sind insofern das Bindeglied zu einer "digitalen Welt" als das technisches Referenz-System RSYₜ mit den Referenz-Systemkomponenten RSYK, das in Bezug auf die technische Domäne mit dem technischen System SYₜ gleich oder vergleichbar ist und in Bezug auf die Systemkomplexität unterschiedlich oder vergleichbar sein kann, durch einen in einer Datenbank DB oder in einem Datenverarbeitungssystem DVS gespeicherten, zur "digitalen Welt" gehörenden Digitalen Zwilling DZ als komplexes Referenzmodell RM des technischen Referenz-Systems RSYₜ digital repräsentiert wird und das Modellierungswerkzeug MW durch Zugriffe auf den Digitalen Zwilling DZ Referenzmodellanforderungen RMA von Referenzmodellkomponenten RMK für die Entwicklung des technischen Systems SYₜ weitergeben kann und zu diesem Zweck eine geeignete Referenzmodellanforderung RMAₓ bestimmt wird, z.B. durch Selektion oder Auswahl.

Um diese geeignete Referenzmodellanforderung RMAₓ weitergeben zu können, weist das Modellierungswerkzeug MW eine Steuerungseinrichtung STE und eine mit der Steuerungseinrichtung STE verbundene und vorzugsweise als Grafische Benutzeroberfläche GBOF ausgebildete Input/Output-Schnittstelle IOSS für Benutzereingaben und -ausgaben eines Benutzers BEN oder Anwenders ANW des Modellierungswerkzeugs MW auf.

Die Steuerungseinrichtung STE ist für die Entwicklung des technischen Systems SYₜ und die Zugriffe auf den Digitalen Zwilling DZ mit der Datenbank DB oder dem Datenverarbeitungssystem DVS verbunden.

Die Weitergabe der Referenzmodellanforderung RMAₓ wird aber weder von dem Modellierungswerkzeug MW noch von der Steuerungseinrichtung STE als solches durchgeführt, sondern die Weitergabe ist Gegenstand eines weiteren digitalen Bausteins in der "digitalen Welt". Dieser digitale Baustein ist ein Computer-Programm-Produkt CPP zum referenzmodellbasierten, anforderungsbezogenen Entwickeln des technischen Systems SYₜ, das als Computer-implementiertes Werkzeug ausgebildet ist und vorzugsweise eine Anwendungssoftware - auch als "APP" bezeichnet - darstellt.

Weiterhin weist das Computer-Programm-Produkt CPP einen nicht-flüchtigen, lesbaren Speicher SP, in dem prozessorlesbare Steuerprogrammbefehle eines Programm-Moduls PGM zum referenzmodellbasierten, anforderungsbezogenen Entwickeln des technischen Systems SYₜ gespeichert sind, sowie einen mit dem Speicher SP verbundenen Prozessor PZ, der die Steuerprogrammbefehle des Programm-Moduls PGM zur Systementwicklung und in diesem Kontext die Ermittlung der Referenzmodellanforderung RMAₓ durch Extrahierung der Referenzmodellanforderung RMAₓ aus den Referenzmodellanforderungen RMA ausführt, aufweist.

Dieses Computer-Programm-Produkt CPP, das als Computer-implementiertes Werkzeug oder die "APP" ist zum referenzmodellbasierten, anforderungsbezogenen Entwickeln des technischen Systems SYₜ in die Steuerungseinrichtung STE ladbar [in der FIGUR 1 ist durch den gestrichelten Doppelpfeil (Pfeil mit doppelter Basis) dargestellt] und kann unabhängig von dem Modellierungswerkzeug MW entwickelt und vertrieben werden.

Wie das referenzmodellbasierte, komponentenbezogene Entwickeln des technischen Systems SYₜ und im Kontext dazu die Weitergabe der Referenzmodellanforderung RMAₓ gemäß dem dargestellten Szenario funktioniert und in dem Modellierungswerkzeug MW und in dem Computer-Programm-Produkt CPP abläuft und durchgeführt wird, wird nun im Zusammenhang mit FIGUR 2 erläutert.

FIGUR 2 zeigt ein Ablaufdiagramm für das referenzmodellbasierte, anforderungsbezogene Entwickeln des technischen Systems SYₜ gemäß dem in der FIGUR 1 dargestellten Szenario. Gemäß diesem Ablaufdiagramm wird die Entwicklung des technischen Systems SYₜ im Kontext der Weitergabe der Referenzmodellanforderung RMAₓ im Wesentlichen durch eine Zugriffsorchestrierung ZGO, bei der szenariogemäß, gestützt durch das Computer-Programm-Produkt CPP oder computergestützt die Zugriffe auf den Digitalen Zwilling DZ zur Weitergabe der geeigneten Referenzmodellanforderung RMAₓ aus den weitergebbaren Referenzmodellanforderungen RMA des Digitalen Zwillings DZ orchestriert werden.

Die Zugriffsorchestrierung ZGO, gemäß der jeder Zugriff mit einer benutzerbasierten Daten- und Befehlseingabe sowie einer logikbasierten Datenbearbeitung und Befehlsumsetzung nach regelsatzbasierter Maßgabe orchestriert wird, unterteilt sich nach dem in der FIGUR 2 dargestellten Ablaufdiagramm in drei Orchestrierungsphasen, einer ersten Orchestrierungsphase OP-1, einer zweiten Orchestrierungsphase OP-2 und einer dritten Orchestrierungsphase OP-3.

Nach regelsatzbasierter Maßgabe bedeutet dabei, dass Regeln maßgebend definieren, welche Informationen, z.B. Aspekte des Referenzmodell bzw. des Digitalen Zwillings, relevant für die Entwicklung einer Komponente des Systems SYₜ sind. Basierend auf diesen Regeln wird also identifiziert welche Informationen für die Entwicklung der Systemkomponente weitergegeben werden müssen und welche weggelassen werden können. Darüber hinaus definieren die Regeln in welcher Art und Weise Informationen transformiert oder umgewandelt werden sollen.

Die Systementwicklung startet gemäß dem Ablaufdiagramm damit, dass in einem ersten Zustand Z1 der Anwender ANW oder Benutzer BEN nach der FIGUR 1 über das Modellierungswerkzeug MW für eine Komponente des Systems SYₜ, z.B. die dedizierte Systemkomponente SYK_{d}, eine komplexe Komponente des Referenzmodells, z.B. eine von den in der FIGUR 1 gezeigten Referenzmodellkomponenten RMK, zu welcher den Referenzmodellkomponenten RMK zugewiesenen Referenzmodellanforderungen für die Systementwicklung weitergegeben werden sollen, selektiert. Dabei werden in einem zweiten Zustand Z2 die komplexe Komponente für die Weitergabe spezifiziert und in einem dritten Zustand Z3 von dem Anwender ANW oder Benutzer BEN ein Befehl zur Weitergabe von modellbasierten Vorgaben oder Anforderungen, z.B. den Referenzmodellanforderungen, ausgewählt.

Anforderungen sind Vorgaben für die Systementwicklung. Diese sind üblicherweise textueller Natur und können sowohl funktionaler als auch nichtfunktionaler Natur sein.
Beispiel: Nach dem Start der Komponente muss diese innerhalb von 3 Sekunden betriebsbereit sein (nichtfunktional). Die Komponente muss in der Lage sein menschliche Spracheingaben zur Steuerung nutzen zu können (funktional).
Solche Anforderungen können der Komponente direkt zugewiesen werden, in diesem Fall besagt eine Regel, dass die direkt zugewiesenen Anforderungen weitergegeben werden sollen.

Dies ist der Übergang von dem Modellierungswerkzeug MW zur ersten Orchestrierungsphase OP-1 der durch das Computer-Programm-Produkt CPP gestützten oder computergestützten Zugriffsorchestrierung ZGO. Dabei wird zunächst im Zuge der benutzerbasierten Daten- und Befehlseingabe bei der Zugriffsorchestrierung ZGO in einem vierten Zustand Z4 die Grafische Benutzeroberfläche GBOF (engl. Graphical User Interface <GUI>) gestartet.

Auf der Basis des spezifizierten komplexen Komponente (vgl. Zustand Z2) und der Befehlsauswahl (vgl. Zustand Z3) werden in der ersten Orchestrierungsphase OP-1, in der es darum geht, einen Ablageort in dem Digitalen Zwilling DZ für die zur Entwicklung des technischen Systems SYₜ geeignete Referenzmodellanforderung RMAₓ zu ermitteln, in einem fünften Zustand Z5 im Zuge der logikbasierten Datenbearbeitung und Befehlsumsetzung bei der Zugriffsorchestrierung ZGO mögliche Zielmodelle für die Weitergabe von modellbasierten Vorgaben oder Anforderungen, z.B. den Referenzmodellanforderungen, ermittelt.

Zielmodell bezieht sich rein auf den Ablageort in der Datenbank DB oder in dem Datenverarbeitungssystem DVS, wo die Referenzmodellanforderung zur Weitergabe bereitgestellt werden soll. Das kann so z.B. die Datenbank DB sein, die z.B. als Bibliothek (Zielbibliothek) mit einer definierten Unterstruktur als Paket (Zielpaket) dient.

Für diese Ermittlung des Ablageortes werden im Zuge der regelbasierten Maßgabe bei der Zugriffsorchestrierung ZGO in einem sechsten Zustand Z6 mögliche Zielmodell-Typen für die Weitergabe von Vorgaben oder Anforderungen definiert.

Sind die möglichen Zielmodelle ermittelt (vgl. Zustand Z5), dann wird in einem ersten Abfragezustand AZ1 im Zuge der benutzerbasierten Daten- und Befehlseingabe bei der Zugriffsorchestrierung ZGO abgefragt, ob mehrere mögliche Zielmodelle existieren. Beim Abfrageergebnis "JA" wird im Zuge der benutzerbasierten Daten- und Befehlseingabe bei der Zugriffsorchestrierung ZGO in einem siebten Zustand Z7 von dem Anwender ANW oder Benutzer BEN ein Zielmodell für die Weitergabe der modellbasierten Vorgaben oder Anforderungen, z.B. den Referenzmodellanforderungen, ausgewählt und danach geht es direkt in einem neunten Zustand Z9 mit dem Ablauf zur Systementwicklung weiter, während beim Abfrageergebnis "NEIN" es direkt in den neunten Zustand Z9 mit dem Ablauf zur Systementwicklung weitergeht

Für diese von dem Anwender ANW oder Benutzer BEN getroffene Zielmodell-Auswahl in dem siebten Zustand Z7 kann im Zuge des Zugangs über das Modellierungswerkzeug MW gemäß einem achten Zustand Z8 kann auch heißen, dass die Zielmodell-Auswahl modellbasierte Vorgaben oder Anforderungen von unterschiedlichen Anwendern oder Benutzern, z.B. Organisationen, enthält. Das erlaubt einen Gesamtblick auf (i) die ganzen modellbasierten Vorgaben oder Anforderungen sämtlicher Personen (z.B. stakeholder) und (ii) z.B. eine passende Produktfamilie oder eine entsprechendes Produkt zu entwickeln.

In dem neunten Zustand Z9 werden im Zuge der logikbasierten Datenbearbeitung und Befehlsumsetzung bei der Zugriffsorchestrierung ZGO mögliche Zielpakete ermittelt. Zur Erläuterung, was ein Zielpaket ist, wird auf die Erläuterungen zu "Zielmodell" verwiesen (vgl. vorstehende Ausführungen zu Zustand Z5) .

Für diese Ermittlung der möglichen Zielpakete im Zuge einer abgestuften Ermittlung des Ablageortes (1. Stufe betrifft die Ermittlung der möglichen Zielmodelle und 2. Stufe betrifft die Ermittlung der möglichen Zielpakete) werden im Zuge der regelbasierten Maßgabe bei der Zugriffsorchestrierung ZGO in einem zehnten Zustand Z10 mögliche Zielpaket-Typen für die Weitergabe von Vorgaben oder Anforderungen definiert.

Zum Abschluss der ersten Orchestrierungsphase OP-1 wird in einem elften Zustand Z11 im Zuge der benutzerbasierten Daten- und Befehlseingabe bei der Zugriffsorchestrierung ZGO von dem Anwender ANW oder Benutzer BEN ein Zielpaket aus den möglichen Zielpaketen ausgewählt.

Mit der Auswahl des Zielpaket und damit der Ermittlung des Ablageortes findet gemäß der Zugriffsorchestrierung ZGO der Übergang von der ersten Orchestrierungsphase OP-1 zur zweiten Orchestrierungsphase OP-2 statt.

Gemäß der zweiten Orchestrierungsphase OP-2 bei der Zugriffsorchestrierung ZGO wird eine zum Ablageort gehörende und für die Weitergabe bedeutende Relevanz der Referenzmodellanforderung RMAₓ für die Entwicklung des technischen Systems SYₜ aus verschiedenen Perspektiven ermittelt.

Ausgangspunkt ist hierfür nach dem Übergang von der ersten Orchestrierungsphase OP-1 aus dem elften Zustand Z11 zu der zweiten Orchestrierungsphase OP-2 in einen zwölften Zustand Z12. In diesen zwölften Zustand Z12 werden im Zuge der logikbasierten Datenbearbeitung und Befehlsumsetzung bei der Zugriffsorchestrierung ZGO High-Level-Referenzmodellanforderungen ermittelt, die den Referenzmodellkomponenten RMK direkt zugewiesen und weitergebbar sind.

An dieser Stelle sein nochmals darauf hingewiesen, dass Anforderungen Vorgaben für die Systementwicklung sind. Diese sind üblicherweise textueller Natur und können sowohl funktionaler als auch nichtfunktionaler Natur sein.
Beispiel: Nach dem Start der Komponente muss diese innerhalb von 3 Sekunden betriebsbereit sein (nichtfunktional). Die Komponente muss in der Lage sein menschliche Spracheingaben zur Steuerung nutzen zu können (funktional).
Solche Anforderungen können der Komponente direkt zugewiesen werden, in diesem Fall besagt eine Regel, dass die direkt zugewiesenen Anforderungen weitergegeben werden sollen.

Für diese Ermittlung der High-Level-Referenzmodellanforderungen werden im Zuge der regelbasierten Maßgabe bei der Zugriffsorchestrierung ZGO in einem dreizehnten Zustand Z13 mögliche Anforderung-Typen für die Weitergabe definiert.

Nach der Ermittlung der High-Level-Referenzmodellanforderungen werden in einem vierzehnten Zustand Z14 im Zuge der logikbasierten Datenbearbeitung und Befehlsumsetzung bei der Zugriffsorchestrierung ZGO Funktionen ermittelt, die den Referenzmodellkomponenten RMK direkt zugewiesen und weitergebbar sind.

Funktionen beschreiben die Umsetzung funktionaler Anforderungen. Eine Funktion ist dabei durch mindestens eine Eingabe, Verarbeitung und mindestens eine Ausgabe charakterisiert. Beispiel: Es wird eine Funktion "Spracherkennung" definiert. Diese hat als Eingabe ein Audio-Signal (z.B. eine menschliche Stimme) und als Ausgabe die erkannte Sprache in textueller Form. Üblicherweise wird eine Komponente durch eine Reihe von Funktionen, welche in Beziehungen zueinanderstehen, charakterisiert. Solche Funktionen können der Komponente direkt zugewiesen werden, in diesem Fall besagt eine Regel, dass die direkt zugewiesenen Anforderungen weitergegeben werden sollen.

Für diese Ermittlung der Funktionen werden im Zuge der regelbasierten Maßgabe bei der Zugriffsorchestrierung ZGO in einem fünfzehntenten Zustand Z15 mögliche Funktion-Typen für die Weitergabe definiert.

Im Anschluss an die Ermittlung der Funktionen werden in einem sechzehnten Zustand Z16 im Zuge der logikbasierten Datenbearbeitung und Befehlsumsetzung bei der Zugriffsorchestrierung ZGO Variabilitätspunkte ermittelt, die den Referenzmodellkomponenten RMK direkt zugewiesen und weitergebbar sind.

Variabilitätspunkte beschreiben Merkmale, in denen sich verschiedene Ausprägungen einer Komponente unterscheiden können. Dies kann z.B. basierend auf funktionalen oder nichtfunktionalen Anforderungen basieren.

Beispiel: Um unterschiedliche Märkte zu unterstützen, ist eine hochpreisige und eine niedrigpreisige Version der Komponente wünschenswert. Dies ist eine nichtfunktionale Anforderung. Um dies zu erreichen legen wird z.B. ein Variabilitätspunkt "Gehäusematerial" fest. Danach kann die Komponente mit einem Edelstahlgehäuse, z.B. teuer, für den hochpreisigen Markt, oder mit einem Plastikgehäuse, z.B. billig für den tiefpreisigen Markt, ausliefert werden.

Eine Regel besagt nun, dass solche Variabilitätspunkte, die der Komponente zugewiesen worden sind, weitergebbar sind.

Für diese Ermittlung der Variabilitätspunkte werden im Zuge der regelbasierten Maßgabe bei der Zugriffsorchestrierung ZGO in einem siebzehntenten Zustand Z17 mögliche Variabilitätspunkt-Typen für die Weitergabe definiert.

Zusätzlich zu Ermittlung der Variabilitätspunkte werden in einem achtzehnten Zustand Z18 im Zuge der logikbasierten Datenbearbeitung und Befehlsumsetzung bei der Zugriffsorchestrierung ZGO die High-Level-Referenzmodellanforderungen, die den Referenzmodellkomponenten RMK implizit, über die Funktionen oder die Variabilitätspunkte, zugewiesen sind und weitergebbar sind, ermittelt, bevor in einem neunzehnten Zustand Z19 im Zuge der logikbasierten Datenbearbeitung und Befehlsumsetzung bei der Zugriffsorchestrierung ZGO technische Schnittstellen der Referenzmodellkomponente RMKₓ, die weitergegeben weitergebbar sind, ermittelt werden.

Implizit zugewiesene Anforderungen sind solche die vom Anwender nicht direkt auf die Komponente zugewiesen worden sind, sondern die indirekt auf die Komponente wirken.
Beispiel: Eine nichtfunktionale Anforderung wird auf eine Funktion zugewiesen, z.B. "die Spracherkennung muss zu 90% zuverlässig sein" wird der Funktion "Spracherkennung" zugewiesen. Damit diese Information nicht verloren geht muss diese nichtfunktionale Anforderung ebenfalls weitergegeben werden. Dies wird durch eine Regel definiert.

Eine Regel definiert zudem, dass zumindest diejenigen Schnittstellen weitergegeben werden, welche "von außen" sichtbar sind. Denn diese Schnittstellen sind damit eine "Anforderung" an die Komponente. Schnittstellen sind dabei technischer Natur, z.B. eine "Universal Serial Bus <USB>"-Schnittstelle.

Für die Ermittlung der technischen Schnittstellen in dem neunzehnten Zustand Z19 werden im Zuge der regelbasierten Maßgabe bei der Zugriffsorchestrierung ZGO in einem zwanzigsten Zustand Z20 technische Schnittstellen-Typen definiert.

Mit der Überprüfung und Anpassung von benutzer- oder anwendergetroffenen Vorauswahlen im Zuge der benutzerbasierten Daten- und Befehlseingabe bei der Zugriffsorchestrierung ZGO durch den Anwender ANW oder Benutzer BEN und zum Abschluss der zweiten Orchestrierungsphase OP-2 in einem einundzwanzigsten Zustand Z21 findet der Übergang von der zweiten Orchestrierungsphase OP-2 zur dritten Orchestrierungsphase OP-3 statt.

Gemäß der dritten Orchestrierungsphase OP-3 bei der Zugriffsorchestrierung ZGO aus der ermittelten Relevanz die Referenzmodellanforderung RMAₓ extrahiert wird.

Ausgangspunkt ist hierfür nach dem Übergang von der zweiten Orchestrierungsphase OP-2 in dem einundzwanzigsten Zustand Z21 zu der dritten Orchestrierungsphase OP-3 in einem zweiundzwanzigsten Zustand Z22. In diesem zweiundzwanzigsten Zustand Z22 wird im Zuge der benutzerbasierten Daten- und Befehlseingabe bei der Zugriffsorchestrierung ZGO basierend auf der Vorauswahl durch den Anwender ANW oder Benutzer BEN in dem Zustand Z21 die Referenzmodellanforderung RMAₓ, welche als Sub-Elemente gegliedert nach den Perspektiven alle gewählten Informationen aus der zweiten Orchestrierungsphase OP-2 in strukturierter Form enthält, erzeugt und im gewählten Zielmodell und Zielpaket abgelegt.

Nach der Erzeugung der Referenzmodellanforderung RMAₓ und deren Ablage in dem gewählten Zielmodell und Zielpaket ist diese bereit für die Weitergabe und wird zu diesem Zweck in einem dreiundzwanzigsten Zustand Z23 dem Modellierungswerkzeug MW übergeben. Die Referenzmodellkomponente RMKₓ enthält hierfür Sub-Elemente gegliedert nach Perspektiven, wie die High-Level-Referenzmodellanforderungen, die Funktionen, die Variabilitätspunkte und die technischen Schnittstellen.

Gemäß einem vierundzwanzigsten Zustand Z24 in Bezug auf daS Modellierungswerkzeug MW mit der dort übergebenen Referenzmodellkomponente RMKₓ sind diese Sub-Elemente entsprechend ihrer originären Perspektiven beschrieben, d.h. sie sind vom selben Typ wie die originären Elemente und lassen sich deshalb nahtlos integrieren und Oder nutzen.

Zum Schluss der Zugriffsorchestrierung ZGO, der dritten Orchestrierungsphase OP-3 und dem Ende des Ablaufdiagramms wird in einem fünfundzwanzigsten Zustand Z25 im Zuge der benutzerbasierten Daten- und Befehlseingabe von dem Anwender ANW oder Benutzer BEN das Ergebnis der der Zugriffsorchestrierung ZGO überprüft und die Grafische Benutzeroberfläche GBOF (engl. Graphical User Interface <GUI>) geschlossen und beendet.

## Patentansprüche

1. Verfahren zum referenzmodellbasierten, anforderungsbezogenen Entwickeln eines technischen Systems (SYₜ), bei dem in Bezug auf ein technisches Referenz-System (RSYₜ) mit mehreren Referenz-Systemkomponenten (RSYK), die jeweils einen Beitrag zur Funktion des technischen Referenz-Systems (RSYₜ) leisten und durch einen gespeicherten Digitalen Zwilling (DZ) als komplexes Referenzmodell (RM) des technischen Referenz-Systems (RSYₜ) digital repräsentiert werden, durch Zugriffe auf den Digitalen Zwilling (DZ) Referenzmodellanforderungen (RMA) von Referenzmodellkomponenten (RMK) für die Entwicklung des technischen Systems (SYₜ) weitergebbar sind, die folgendes beinhalten
- Aussagen über notwendige Beschaffenheiten und Fähigkeiten der Referenz-Systemkomponenten (RSYK), die diese zu erfüllen haben damit textuelle Dokumentvorgaben, Normen und/oder Spezifikationen entsprochen wird sowie Leistungen erbracht werden, oder
- Aussagen über notwendige Beschaffenheiten und Fähigkeiten des Referenz-Systems (RSYₜ), die dieses zu haben hat damit textuelle Dokumentvorgaben, Normen und/oder Spezifikationen entsprochen wird sowie Leistungen erbracht werden, beinhalten,
**gekennzeichnet durch**
**a**) eine computergestützte Zugriffsorchestrierung (ZGO), bei der
- mit einer benutzerbasierten Daten- und Befehlseingabe sowie einer logikbasierten Datenbearbeitung und Befehlsumsetzung nach regelsatzbasierter Maßgabe der Zugriff orchestriert wird, und
- für eine zur Entwicklung des technischen Systems (SYₜ), insbesondere durch Benutzerauswahl, vorgesehene, dedizierte Systemkomponente (SYK_{d}), die einen Beitrag zur Funktion des technischen Systems (SYₜ) leistet, mit einer, insbesondere durch Benutzerauswahl, vorgesehenen, dedizierten Anforderung (AF_{d}), die der dedizierten Systemkomponente (SYK_{d}) zugewiesen ist, in Bezug auf das Referenz-System (RSYₜ) mit den Referenz-Systemkomponenten (RSYK) eine zu diesem Zweck geeignete Referenzmodellanforderung (RMAₓ) der weitergebbaren Referenzmodellanforderungen (RMA) ermittelt wird, mit der
**a1**) in einer ersten Orchestrierungsphase (OP-1) ein Ablageort in dem Digitalen Zwilling (DZ) für die zur Entwicklung des technischen Systems (SYₜ) geeignete Referenzmodellanforderung (RMAₓ) ermittelt wird,
**a2**) in einer zweiten Orchestrierungsphase (OP-2) eine zum Ablageort gehörende und für die Weitergabe bedeutende Relevanz der Referenzmodellanforderung (RMAₓ) für die Entwicklung des technischen Systems (SYₜ) aus verschiedenen Perspektiven ermittelt wird,
**a3**) in einer dritten Orchestrierungsphase (OP-3) aus der ermittelten Relevanz die Referenzmodellanforderung (RMAₓ) extrahiert wird.

2. Verfahren nach Anspruch 1, **dadurch gekennzeichnet, dass**
der Ablageort für die geeignete Referenzmodellanforderung (RMAₓ) durch abgestuftes Ermitteln eines Zielmodells des Referenzmodells (RM) und im Weiteren eines Zielpakets als Unterstruktur des Zielmodells des Referenzmodells (RM) in Bezug auf die Relevanz ermittelt wird.

3. Verfahren nach Anspruch 2, **dadurch gekennzeichnet, dass**
die zum Ablageort gehörende und für die Weitergabe maßgebende Relevanz der Referenzmodellanforderung (RMAₓ) für die Entwicklung des technischen Systems (SYt) aus den verschiedenen Perspektiven ermittelt wird, indem in der nachfolgend angegebenen Reihenfolge
- High-Level-Referenzmodellanforderungen, die den Referenzmodellkomponenten (RMK) direkt zugewiesen und weitergebbar sind, ermittelt werden,
- Funktionen, die den Referenzmodellkomponenten (RMK) direkt zugewiesen und weitergebbar sind, ermittelt werden,
- Variabilitätspunkte, die den Referenzmodellkomponenten (RMK) direkt zugewiesen und weitergebbar sind, ermittelt werden,
- die High-Level-Referenzmodellanforderungen, die den Referenzmodellkomponenten (RMK) implizit, über die Funktionen oder die Variabilitätspunkte, zugewiesen und weitergebbar sind, ermittelt werden und
- technische Schnittstellen der Referenzmodellkomponenten (RMK), die weitergebbar sind, ermittelt werden.

4. Computer-Programm-Produkt (CPP) zum referenzmodellbasierten, anforderungsbezogenen Entwickeln eines technischen Systems (SYₜ) mit einem nicht-flüchtigen, lesbaren Speicher (SP), in dem prozessorlesbare Steuerprogrammbefehle eines Programm-Moduls (PGM) zum referenzmodellbasierten, anforderungsbezogenen Entwickeln des technischen Systems (SYₜ) gespeichert sind, und einem mit dem Speicher (SP) verbundenen Prozessor (PZ), der die Steuerprogrammbefehle des Programm-Moduls (PGM) zur Systementwicklung ausführt, wobei hierfür in Bezug auf ein technisches Referenz-System (RSYₜ) mit mehreren Referenz-Systemkomponenten (RSYK), die jeweils einen Beitrag zur Funktion des technischen Referenz-Systems (RSYₜ) leisten und durch einen gespeicherten Digitalen Zwilling (DZ) als komplexes Referenzmodell (RM) des technischen Referenz-Systems (RSYₜ) digital repräsentiert werden, durch Zugriffe auf den Digitalen Zwilling (DZ) Referenzmodellanforderungen (RMA) von Referenzmodellkomponenten (RMK) für die Entwicklung des technischen Systems (SYₜ) weitergebbar sind, die folgendes beinhalten
- Aussagen über notwendige Beschaffenheiten und Fähigkeiten der Referenz-Systemkomponenten (RSYK), die diese zu erfüllen haben damit textuelle Dokumentvorgaben, Normen und/oder Spezifikationen entsprochen wird sowie Leistungen erbracht werden, oder
- Aussagen über notwendige Beschaffenheiten und Fähigkeiten des Referenz-Systems (RSYₜ), die dieses zu haben hat damit textuelle Dokumentvorgaben, Normen und/oder Spezifikationen entsprochen wird sowie Leistungen erbracht werden, beinhalten,
**dadurch gekennzeichnet, dass**
der Prozessor (PZ) und das Programm-Modul (PGM) zur Entwicklung des technischen Systems (SYₜ) derart ausgebildet sind, dass
**a**) im Zuge einer Zugriffsorchestrierung, bei der
- mit einer benutzerbasierten Daten- und Befehlseingabe sowie einer logikbasierten Datenbearbeitung und Befehlsumsetzung nach regelsatzbasierter Maßgabe der Zugriff orchestriert wird, und
- für eine zur Entwicklung des technischen Systems (SYₜ), insbesondere durch Benutzerauswahl, vorgesehene, dedizierte Systemkomponente (SYK_{d}), die einen Beitrag zur Funktion des technischen Systems (SYₜ) leistet, mit einer, insbesondere durch Benutzerauswahl, vorgesehenen, dedizierten Anforderung (AF_{d}), die der dedizierten Systemkomponente (SYK_{d}) zugewiesen ist, in Bezug auf das Referenz-System (RSYₜ) mit den Referenz-Systemkomponenten (RSYK) eine zu diesem Zweck geeignete Referenzmodellanforderung (RMAₓ) der weitergebbaren Referenzmodellanforderungen (RMA) ermittelt wird,
**a1**) in einer ersten Orchestrierungsphase (OP-1) ein Ablageort in dem Digitalen Zwilling (DZ) für die zur Entwicklung des technischen Systems (SYₜ) geeignete Referenzmodellanforderung (RMAₓ) ermittelt wird,
**a2**) in einer zweiten Orchestrierungsphase (OP-2) eine zum Ablageort gehörende und für die Weitergabe bedeutende Relevanz der Referenzmodellanforderung (RMAₓ) für die Entwicklung des technischen Systems (SYₜ) aus verschiedenen Perspektiven ermittelt wird,
**a3**) in einer dritten Orchestrierungsphase (OP-3) aus der ermittelten Relevanz die Referenzmodellanforderung (RMAₓ) extrahiert wird.

5. Computer-Programm-Produkt (CPP) nach Anspruch 4, **dadurch gekennzeichnet, dass**
der Prozessor (PZ) und das Programm-Modul (PGM) zur Entwicklung des technischen Systems (SYₜ) derart ausgebildet sind, dass der Ablageort für die geeignete Referenzmodellanforderung (RMAₓ) durch abgestuftes Ermitteln eines Zielmodells des Referenzmodells (RM) und im Weiteren eines Zielpakets als Unterstruktur des Zielmodells des Referenzmodells (RM) in Bezug auf die Relevanz ermittelt wird.

6. Computer-Programm-Produkt (CPP) nach Anspruch 5, **dadurch gekennzeichnet, dass**
der Prozessor (PZ) und das Programm-Modul (PGM) zur Entwicklung des technischen Systems (SYₜ) derart ausgebildet sind, dass die zum Ablageort gehörende und für die Weitergabe maßgebende Relevanz der Referenzmodellanforderung (RMAₓ) für die Entwicklung des technischen Systems (SYt) aus den verschiedenen Perspektiven ermittelt wird, indem in der nachfolgend angegebenen Reihenfolge
- High-Level-Referenzmodellanforderungen, die den Referenzmodellkomponenten (RMK) direkt zugewiesen und weitergebbar sind, ermittelt werden,
- Funktionen, die den Referenzmodellkomponenten (RMK) direkt zugewiesen und weitergebbar sind, ermittelt werden,
- Variabilitätspunkte, die den Referenzmodellkomponenten (RMK) direkt zugewiesen und weitergebbar sind, ermittelt werden,
- die High-Level-Referenzmodellanforderungen, die den Referenzmodellkomponenten (RMK) implizit, über die Funktionen oder die Variabilitätspunkte, zugewiesen und weitergebbar sind, ermittelt werden und
- technische Schnittstellen der Referenzmodellkomponenten (RMK), die weitergebbar sind, ermittelt werden.

7. Modellierungswerkzeug (MW) zum referenzmodellbasierten, anforderungsbezogenen Entwickeln eines technischen Systems (SYₜ), bei dem in Bezug auf ein technisches Referenz-System (RSYₜ) mit mehreren Referenz-Systemkomponenten (RSYK), die jeweils einen Beitrag zur Funktion des technischen Referenz-Systems (RSYₜ) leisten und durch einen gespeicherten Digitalen Zwilling (DZ) als komplexes Referenzmodell (RM) des technischen Referenz-Systems (RSYₜ) digital repräsentiert werden, durch Zugriffe auf den Digitalen Zwilling (DZ) Referenzmodellanforderungen (RMA) von Referenzmodellkomponenten (RMK) für die Entwicklung des technischen Systems (SYₜ) weitergebbar sind, die folgendes beinhalten
- Aussagen über notwendige Beschaffenheiten und Fähigkeiten der Referenz-Systemkomponenten (RSYK), die diese zu erfüllen haben damit textuelle Dokumentvorgaben, Normen und/oder Spezifikationen entsprochen wird sowie Leistungen erbracht werden, oder
- Aussagen über notwendige Beschaffenheiten und Fähigkeiten des Referenz-Systems (RSYₜ), die dieses zu haben hat damit textuelle Dokumentvorgaben, Normen und/oder Spezifikationen entsprochen wird sowie Leistungen erbracht werden, beinhalten,
mit einer Steuerungseinrichtung (STE) und einer mit der Steuerungseinrichtung (STE) verbundene Input/Output-Schnittstelle (IOSS) für Benutzereingaben und -ausgaben, wobei die Steuerungseinrichtung (STE) für die Systementwicklung mit einer Datenbank (DB) zur Speicherung des Digitalen Zwillings (DZ) verbunden ist,
**gekennzeichnet durch**
ein Computer-Programm-Produkt (CPP) nach einem der Anspruche 4 bis 6, das zur Durchführung des Verfahrens nach einem der Ansprüche 1 bis 3 in die Steuerungseinrichtung (STE) ladbar ist.
